# EUROPEAN PATENT SPECIFICATION

(11) **EP 0 532 625 B1**
(45) Date of publication and mention of the grant of the patent: **19.04.1995**
(21) Application number: 91911138.5
(22) Date of filing: 31.05.1991
(51) Int. Cl.: D21C 11/12, D21C 11/04

(54) **PROCESS FOR THE PREPARATION OF AN AQUEOUS SOLUTION OF SODIUM COMPOUNDS**
VERFAHREN ZUR HERSTELLUNG EINER WÄSSRIGEN LÖSUNG VON NATRIUMVERBINDUNGEN
PROCEDE DE PREPARATION D'UNE SOLUTION AQUEUSE DE COMPOSES DE SODIUM

(30) Priority: 31.05.1990 SE 9001957
(43) Date of publication of application: 24.03.1993
(73) Proprietor: CHEMREC AKTIEBOLAG, S-182 11 Danderyd (SE)
(72) Inventor: STIGSSON, Lars, S-237 00 Bjärred (SE); BERNHARD, Nils, S-183 46 Täby (SE)
(74) Representative: Lettström, Richard Wilhelm
(86) International application number: PCT/SE91/00383
(87) International publication number: WO 91/19042

(56) References cited:
- WO-A-89/08491
- GB-A- 1 401 333
- SE-C- 374 028
- US-A- 4 808 264

## Description

### Technical field

The present invention relates to a process for the preparation of an aqueous solution of sodium compounds which, together with a hot gas containing carbon monoxide, carbon dioxide and hydrogen gas have been formed at partial combustion of cellulose spent liquors, the gas with its content of sodium compounds being brought into direct contact with a dissolving liquid in a device consisting of a vessel, partially filled with the dissolving liquid and a vertically arranged downcoming tube, the upper part of which being connected to a gas generator and the lower part of which debouching below the resting surface of the dissolving liquid.

### Background of the invention

At the manufacture of paper pulp spent liquors are generated which comprise alkalimetal containing and carbonaceous compounds having different compositions depending on which technique having been used at the delignification. Bleaching of paper pulp generates spent liquors having different compositions as well.

At the delignification according to the sulphite process different inorganic alkaline components are used, such as sodium or magnesium compounds. At the delignification according to the sulphate process the inorganic alkaline compounds consist of sodium compounds. Spent liquors from the bleaching of sulphate pulp contains a high amount of sodium chloride. The above and other spent liquors from the cellulose industry can be the starting material at the use of the present invention, which will be exemplified in detail below with reference to a sulphate spent liquor without being restricted to this spent liquor.

At the application of the sulphate process the wood is digested using a digestion liquid the active components of which substantially consist of sodium hydroxide and sodium hydrogen sulphide. Besides cellulose fibres a spent liquor is produced at the digestion which spent liquor is called black liquor containing recoverable chemicals and combustible carbonaceous compounds. For the present being the chemicals are mostly recovered by combusting the liquor in a recovery boiler whereby the energy content of the carbonaceous compounds is used for the production of steam.

In the recovery boiler the liquor is partially combusted in the bottom zone of the boiler whereby the sodium and sulphur containing chemicals are reduced and form a melt substantially consisting of sodium carbonate and sodium sulphide. The carbonaceous compounds form a combustible gas containing carbon monoxide, carbon dioxide, and hydrogen, which gas is finally combusted by adding secondary air in the upper part of the recovery boiler.

The melt of chemicals form a pool of melt in the bottom part of the recovery boiler from which they are drafted in melt form in order to be dissolved later on in a separate tank, the so called melt dissolver. The solution obtained at the dissolution of the above sodium compounds in water or a weak alkaline aqueous solution will mainly contain sodium carbonate, sodium sulphide and sodium hydroxide and is called green liquor. The green liquor is treated with quick lime during the formation of sodium hydroxide and hardly dissolvable calcium carbonate according to the following:

Na₂CO₃ + CaO + H₂O → 2NaOH +CaCO₃

The sodium sulphide does not participate in the reaction. The liquid solution which then mainly consists of the active digesting chemicals sodium hydroxide and sodium hydrogen sulphide, is then named white liquor. The calcium carbonate is normally burned in a roller oven for recovering the calcium oxide. When washing precipitated calcium carbonate, the so called lime sludge, a diluted alkaline solution named weak liquor is obtained. Weak liquor and white liquor have a similar chemicals content. The weak liquor has, however, a considerably lower concentration.

The green liquor used for the preparation of white liquor is normally composed as follows:

| | |
|---|---|
| sodium hydroxide, NaOH | 15 - 25 g/l |
| sodium sulphide, Na₂S | 20 - 50 g/l |
| sodium carbonate, Na₂CO₃ | 90 - 105 g/l |
| sodium sulphate, Na₂SO₄ | 5 - 10 g/l |
| (all calculated as sodium hydroxide) | |

The white liquor, being used as digesting liquor, is normally composed as follows:

| | |
|---|---|
| sodium hydroxide, NaOH | 80 - 120 g/l |
| sodium sulphide, Na₂S | 20 - 50 g/l |
| sodium carbonate, Na₂CO₃ | 10 - 30 g/l |
| sodium sulphate, Na₂SO₄ | 5 - 10 g/l |
| (all calculated as sodium hydroxide) | |

The content of chemicals of the green liquor is normally between 150 and 200 g/l calculated as sodium hydroxide. Higher concentrations are undesirable due to precipitation of salts and a lower concentration means that unnecessary large amounts of water being handled in the process.

Partial combustion of cellulose spent liquor can take place in for example a gas generator of the type described in US-A-4 808 264. According to this process droplets of melted sodium compounds and a combustible gas comprising carbon monoxide, carbon dioxide, and hydrogen are formed at the partial combustion. The object of the present invention is to separate sodium compounds of such a mixture of gas and melted droplets and to prepare an aqueous solution suitable for further processing into digestion liquor.

At the partial combustion of cellulose spent liquor at temperatures from 700°C to 1400°C the sodium compounds being formed be present in both solid, liquid, and gaseous form. Furthermore a fine smoke of sodium, sodium oxides, and sodium hydroxide is formed. The separation of gas and sodium compounds which are present in different form is complicated partly by the tackiness of the melted sodium compounds, partly by the difficulty of separating the fine smoke, which gives raise to depositions on heat exchange tubes and thus requires advanced filtering and washing equipment in order to avoid discharge to the environment.

A further complication is the risk for explosions at the contact between water and collected melt of sodium compounds.

At the partial combustion of black liquor between 700°C and 1400°C a combustible gas comprising carbon monoxide, carbon dioxide, hydrogen, methane, hydrogen sulphide, carbon oxysulphide, steam, optionally nitrogen and gaseous sodium and sodium compounds, as well as sodium, potassium and sulphur compounds mainly in melted form are obtained. These melted compounds are mainly sodium carbonate, sodium sulphide and sodium hydroxide. A small amount of sodium and sodium compounds is present as a fine smoke, which is difficult to separate of from the gas. In the lower part of this temperature range part of the sodium and sulphur compounds are present in solid form. Even at these lower temperatures, however, some amount of sodium and potassium compounds are present in liquid form. Mixtures of solid, liquid, and gaseous sodium compounds exhibit a large tackiness. As mentioned above there exists a risk for an explosion if larger amounts of melt is brought into contact with water, and thus a collection of melt should be avoided.

The problem of tackiness and deposition as well as the risk of explosion makes it desirous to use a wet separation method and to dissolve the sodium compounds in a liquid without being collected prior to that in such an amount that a risk of explosion is at hand.

### Description of the present invention

It has now been shown possible to solve the above described problems by preparing an aqueous solution of the solid, melted and gaseous sodium compounds which together with the hot gas are being formed at the partial combustion of cellulose spent liquor. The solution of sodium compounds is in turn used for the preparation of digestive liquor while the gas being freed from sodium compounds is used for, for example, the production of steam and electricity. The separation between gas and sodium compounds comprises that the gas and its contents of sodium compounds first is allowed to pass down into a vessel through a downcoming tube connected to the gas generator, into which tube a dissolving liquid is added, and is then allowed to pass between the downcoming tube and an upcoming tube, which is opened in both ends and upper opening of which debouches above the resting surface of the dissolving liquid, and the lower end of which debouches below the resting surface of the dissolving liquid, and which wholly or partly surrounds the downcoming tube, whereby gas, sodium compounds and dissolving liquid being brought with the gas are brought into intense contact, whereby the sodium compounds are separated off and are dissolved in the dissolving liquid, which is drafted for the preparation of a digestion liquid, and the gas, now substantially freed from sodium compounds are discharged from the vessel.

The present invention prevents tackiness and deposition at the separation of gas and sodium compounds as gas and sodium compounds already in the downcoming tube are rapidly cooled by injected dissolving liquid to a temperature below the melting point of the sodium compounds. The dissolving liquid also has the task of wetting the downcoming tube and thereby preventing deposition of sodium compounds. The dissolving liquid being added to the downcoming tube is injected into the upper part of the downcoming tube, so that the inner surface of the tube is being completely protected by liquid. Optionally, further dissolving liquid may be added further down in the tube. The liquid can be added through a slot, several minor orifices or nozzles.

After having passed the downcoming tube, the gas turns and raises through the interstice between the downcoming tube and the upcoming tube. The gas hereby brings with it dissolving liquid and an intense contact is obtained between the gas, the sodium compounds and the dissolving liquid. The melt remaining in the gas and solid sodium compounds including optional smoke of sodium are hereby separated from the gas and are dissolved into the liquid. Optionally a smaller amount of larger droplets of melted sodium compounds and soot form a solid residue that must be separated off from the solution.

In order to maintain stable flow conditions and thereby also a predictable and good function of separation in the vessel, the gas flow rate through the upcoming tube has to be restricted by selecting the cross-section between downcoming tube and upcoming tube in such a way that the gas flow rate in the upper part of the upcoming tube is less than 20 meter per second, preferably less than 10 meter per second, more preferably less than 5 meter per second.

In the present invention the previously mentioned sodium and potassium compounds are efficiently separated although they are present in a hardly separable mixture of solid, melted and gaseous salts. Furthermore, a collection of melt is avoided as the compounds mentioned are collected in the dissolving liquid while they are small particles and small melted droplets.

In the present invention a solution is obtained which as to its composition remains of that of green liquor. The concentration of sodium compounds in the liquid drafted of the present invention is adjusted to between 100 and 200 grammes per litre, for example by adding external liquid to the vessel. The liquid added should be neutral or weakly alkaline. Water and weak liquor are both suitable such liquids.

The susceptibility of deposition of green liquor decreases with increasing temperature and thus it is suitable to adjust the temperature in the vessel in such a way that it exceeds 40°C, preferably exceeds 60°C. The temperature of the liquid in the vessel should be at least 5°C lower than the boiling point of the dissolving liquid in order to avoid local boiling in vessel and connected pumps with worse efficiency as a consequence.

In the present invention the temperature of the liquid in the vessel is adjusted and thus the temperature and the concentration of the green liquor drafted by adding dissolving liquid at a lower temperature than desired temperature of the green liquor and/or by circulating dissolving liquid from the vessel through a cooler and back to the vessel.

In those cases the green liquor drafted according to the present invention is a smaller part of of the total green liquor flow of a sulphate pulp industry, only, it is possible to further decrease the concentration of the green liquor without increasing the total flow of water to the process by utilizing in the sulphate pulp industry internally generated weak liquor as a dissolving liquid. In such cases the concentration of sodium compounds may be adjusted to at least 10 grammes per litre, preferably at least 30 grammes per litre.

At the combustion of black liquor using air as an oxidation agent the volume part of carbon monoxide will normally be adjusted to between 8 and 20 %, preferably between 10 and 16%. Using pure oxygen as an oxidation agent the volume part of carbon monoxide will normally be adjusted to between 15 and 40%, preferably between 19 and 32%. The volume part of hydrogen sulphide is normally less than 1%. The volume parts above are given as part of dry gas.

The following chemical equilibria are of importance for the composition of green liquor produced according to the present invention:

Na₂CO₃ + H₂O < - > NaHCO₃ + NaOH (1)

Na₂S + H₂O < - > NaHS + NaOH (2)

2NaOH + CO₂ < - > Na₂CO₃ + H₂O (3)

2NaHS + CO₂ < - > Na₂CO₃ + H₂S (4)

NaOH + H₂S < - > NaHS + H₂O (5)

At the contact between gas containing carbon dioxide and hydrogen sulphide and sodium alkaline solutions sodium carbonate and sodium hydrogen sulphide are formed. Sodium carbonate in an aqueous solution forms sodium hydrogen carbonate. The sodium hydrogen carbonate is an unwanted compound in green liquor as it, at the causticising requires the double amount of quick lime per mole of sodium compared with sodium carbonate. The formation of sodium hydrogen carbonate is supported by a high partial pressure of carbon dioxide and a high total pressure in the gas bulk.

A high partial pressure of carbon dioxide will counteract the absorption of hydrogen sulphide as well, and can even contribute to evaporation of hydrogen sulphide from the solution, which is disadvantageous by the increased need for gas cleaning that will occur.

Selective absorption of hydrogen sulphide rather than carbon dioxide is supported by a short contact time and a large contact area between liquid and gas. In the present invention the desired ratio is obtained as the gas flow rate through the downcoming tube and the upcoming tube is more than 0.5 meter per second, preferably more than 1 meter per second, more preferably more than 2 meter per second. In order to further suppress an unwanted formation of hydrogen carbonate it is advantageous if the gas pressure of the vessel is below three bars.

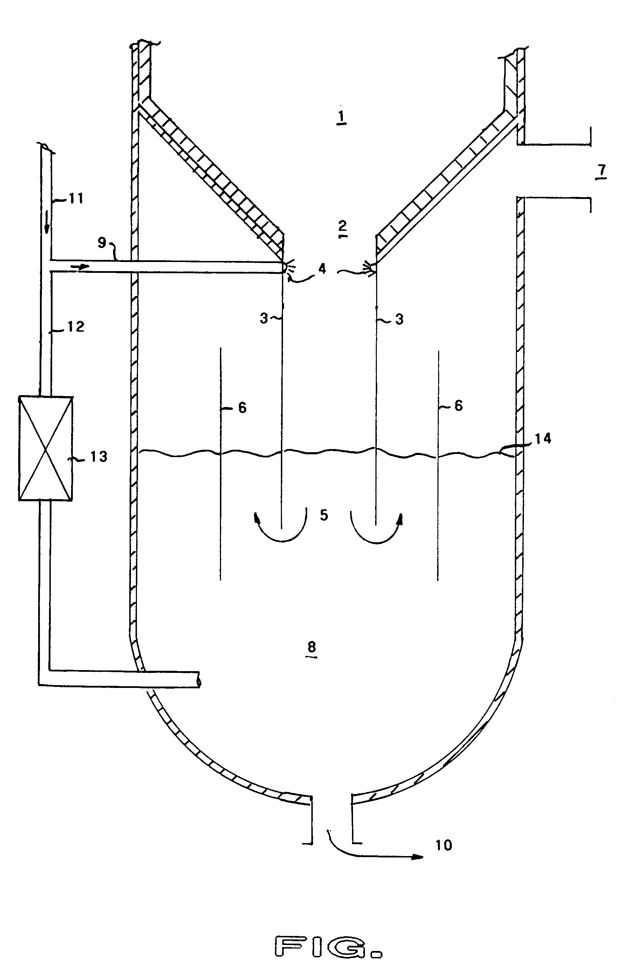

The invention will be illustrated more in detail by the cross-section in FIG. 1, wherein 1 denotes the reaction zone of the gas generator, wherein atomized black liquor is partially combusted at 700 to 1400°C.

Gas generated and containing solid particles, melted droplets and aerosol is forced through the venturi 2 and down into the downcoming tube 3. Immediately in connection with the transition of the venturi into the downcoming tube an aqueous cooling liquid is injected into the gas flow through nozzles 4 or through an annular slot. The surface of the downcoming tube 3 is thereby coated and the gas is cooled to the saturation temperature of water steam at the actual pressure.

The cooled gas is forced to turn 180° at the lower end 5 of the downcoming tube, which end is preferably serrated in order to evenly distribute the gas flow around its circumference. The gas then raises through a upcoming tube 6 being concentrically arranged around the downcoming tube, which upcoming tube surrounds the downcoming tube. The gas then leaves the system through one or more gas outlets 7. The level of the liquid lock 8 is partly monitored by the addition of cooling liquid 9, partly by the draft of product liquid 10, which contains dissolved sodium compounds. The flow of cooling liquid 9 consists of two part streams, the make-up flow 11, and the recirculation flow 12 which passes through a heat exchanger 13. The draft of product liquid takes place through the outlet 10.

## Claims

1. Process for the preparation of an aqueous solution of sodium compounds, said sodium compounds together with a hot gas containing carbon monoxide, carbon dioxide and hydrogen gas being formed by partial combustion of cellulose spent liquors, the gas with its content of sodium compounds being brought into direct contact with a dissolving liquid in a device consisting of a vessel, partially filled with the dissolving liquid, said gas with its content of sodium compounds being forced to pass down through a vertically arranged downcoming tube (3), the upper part of which being connected to a gas generator and the lower part of which debouching below the resting surface of the dissolving liquid, **characterized** in that the gas and its contents of sodium compounds first is allowed to pass down into a vessel through said downcoming tube (3) connected to the gas generator, into which tube the dissolving liquid is added at the upper part thereof, so that the inner surface of the downcoming tube is being completely protected by the dissolving liquid which acts as coolant and prevents the compounds to stick to the inside of said downcoming tube (3), whereafter the cooled contents of the gas and its gaseous components are made to pass upwardly between said downcoming tube and an upcoming tube (6), which is opened in both ends and which is so arranged that the upper end of said upcoming tube opens above the resting surface of the dissolving liquid, and the lower end of which debouches below the resting surface of the dissolving liquid, and which wholly or partly surrounds the downcoming tube, whereby gas, sodium compounds and dissolving liquid are brought into intense contact, whereby the sodium compounds are separated off and are dissolved in the dissolving liquid, which is drafted for the preparation of a liquid, and the gas, now substantially freed from sodium compounds, is discharged from the vessel, and further in that the drafted solution of sodium compounds substantially consists of an aqueous solution of sodium carbonate, sodium hydrogen sulphide, and sodium hydroxide at a concentration of at least 10 and at most 200 grammes of sodium compounds (calculated as NaOH) per litre of solution and that the dissolving liquid in the vessel is kept at a temperature of at least 40°C.

2. Process according to Claim 1, **characterized** in that the dissolving liquid in the vessel is kept at a temperature of at least 5°C lower than the boiling point of the dissolving liquid at the actual pressure.

3. Process according to Claim 1 or 2, wherein the cellulose spent liquor is a spent liquor obtained from the production of sulphate pulp, **characterized** in that the gas entering the downcoming tube has a temperature of between 700°C and 1400°C and that the sodium compounds are substantially sodium carbonate, sodium sulphide, and sodium hydroxide.

4. Process according to one more of Claims 1 - 3, **characterized** in that the pressure is kept below 3 bars.

5. Process according to one or more of Claims 1 - 4, **characterized** in that the temperature of the dissolving liquid of the vessel is adjusted by adding water and/or alkaline aqueous solution having a lower temperature than that of the dissolving liquid, which alkaline aqueous solution is preferably fed from the digestive liquor preparation system of the sulphate pulp industry.

6. Process according to one or more of Claims 1 - 5, **characterized** in that the temperature of the dissolving liquid of the vessel is adjusted by circulating dissolving liquid through a cooler.

7. Process according to one or more of Claims 1 - 6, **characterized** in that the absorption of carbon dioxide in the dissolving liquid is suppressed by designing the downcoming and the upcoming tubes in such a way, that the gas flow rate through the tubes exceeds 0.5 meter per second.

8. Process according to one or more of Claims 1 - 7, **characterized** in that the amount of dissolving liquid carried through the upcoming tube is restricted by designing the downcoming and upcoming tubes in such a way that the gas flow rate in the upper part of the upcoming tube is less than 20 meters per second.

9. Process according to one or more of Claims 1 - 8, **characterized** in that the gas contains 8 to 40 percent by volume of carbon dioxide calculated on dry gas.

10. Process according to one or more of Claims 1 - 9, **characterized** in that dissolving liquid is added in the upper part of the downcoming tube through a slot or a number of orifices or one or more nozzles, and preferably that the gas temperature at the upper part of the upcoming tube has been lowered to a temperature close to that of the dissolving liquid.

11. A device for carrying out the process of preparing an aqueous solution of sodium compounds, said sodium compounds together with a hot gas containing carbon monoxide, carbon dioxide and hydrogen gas being formed by partial combustion of cellulose spent liquors, according to one or more of Claims 1-10, said device comprising a vessel intended to be filled partially with a dissolving liquid, a gas generator with a reaction zone (1) and a vertically arranged downcoming tube (3) connected to said gas generator and having an opening at the lower part thereof, **characterized** in that an upcoming tube is provided which is arranged outside said downcoming tube and wholly or partly surrounds said downcoming tube and which is open at both ends and has upper and lower openings debouching such that gas passing first through the downcoming tube is then allowed to pass between said downcoming tube and said upcoming tube and up through said upcoming tube, and in that at the upper part of the downcoming tube a slot, a number of orifices or one or more nozzles are provided for adding dissolving liquid, so that the inner surface of the downcoming tube is being completely protected by the dissolving liquid which acts as coolant and prevents the compounds to stick to the inside of said downcoming tube (3).

## Patentansprüche

1. Verfahren zur Herstellung einer wässerigen Lösung von Natriumverbindungen, wobei diese Natriumverbindungen gemeinsam mit einem heißen, Kohlenmonoxid, Kohlendioxid und Wasserstoffgas enthaltenden Gas durch teilweise Verbrennung von Zellulose-Ablaugen gebildet sind, weiters das Gas mit seinem Gehalt an Natriumverbindungen in direkten Kontakt mit einer Löseflüssigkeit in einer Vorrichtung gebracht wird, die aus einem teilweise mit der Löseflüssigkeit gefüllten Behälter besteht, und weiters das Gas mit seinem Gehalt an Natriumverbindungen gezwungen wird, nach unten durch ein vertikal angeordnetes, abwärts führendes Rohr (3) zu strömen, dessen oberer Teil mit einem Gasgenerator verbunden ist und dessen unterer Teil unterhalb der ruhenden Oberfläche der Löseflüssigkeit mündet, **dadurch gekennzeichnet**, daß es dem Gas und seinem Gehalt an Natriumverbindungen zuerst gestattet wird, durch das genannte abwärts führende mit dem Gasgenerator verbundene Rohr (3) nach unten in einen Behälter zu strömen, wobei die Löseflüssigkeit am oberen Teil des Rohres in dasselbe eingebracht wird, so daß die innere Oberfläche des abwärts führenden Rohres vollständig durch die Löseflüssigkeit geschützt wird, die als Kühlmittel wirkt und verhindert, daß die Verbindungen an der Innenseite des abwärts führendes Rohres (3) kleben bleiben, worauf die gekühlten Inhalte des Gases und seine gasförmigen Verbindungen gezwungen werden, zwischen dem abwärts führenden Rohr und einem aufwärts führenden Rohr (6) nach oben zu strömen, und das letztgenannte Rohr an beiden Enden offen und so angeordnet ist, daß sich das obere Ende des genannten aufwärts führenden Rohres oberhalb der ruhenden Oberfläche der Löseflüssigkeit öffnet und das untere Ende desselben unterhalb der ruhenden Oberfläche der Löseflüssigkeit mündet und dieses Rohr ganz oder teilweise das abwärts führende Rohr umgibt, wobei Gas, Natriumverbindungen und Löseflüssigkeit in innigen Kontakt miteinander gebracht werden, die Natriumverbindungen abgetrennt und in der Löseflüssigkeit aufgelöst werden, die zur Herstellung einer Flüssigkeit abgezogen wird, und das Gas, das nun im wesentlichen von den Natriumverbindungen befreit ist, von dem Behälter abgeführt wird, und daß weiters die abgezogene Lösung der Natriumverbindungen im wesentlichen aus einer wässerigen Lösung von Natriumcarbonat, Natriumhydrogensulfid und Natriumhydroxid mit einer Konzentration von mindestens 10 und höchstens 200 Gramm Natriumverbindungen (berechnet als NaOH) pro Liter Lösung besteht und daß die Löseflüssigkeit in dem Behälter auf einer Temperatur von mindestens 40°C gehalten wird.

2. Verfahren nach Anspruch 1, **dadurch gekennzeichnet**, daß die Löseflüssigkeit in dem Behälter auf einer Temperatur von mindestens 5°C unterhalb der Siedetemperatur der Löseflüssigkeit bei dem vorliegenden Druck gehalten wird.

3. Verfahren nach Anspruch 1 oder 2, in welchem die Zelluloseablauge eine aus der Herstellung von Sulfatzellstoff stammende Ablauge ist, **dadurch gekennzeichnet**, daß das in das abwärts führende Rohr eintretende Gas eine Temperatur zwischen 700°C und 1400°C aufweist und daß die Natriumverbindungen im wesentlichen aus Natriumkarbonat, Natriumsulfid und Natriumhydroxid bestehen.

4. Verfahren nach einem oder mehreren der Ansprüche 1 bis 3, **dadurch gekennzeichnet**, daß der Druck auf unter 3 bar gehalten wird.

5. Verfahren nach einem oder mehreren der Ansprüche 1 bis 4, **dadurch gekennzeichnet**, daß die Temperatur der Löseflüssigkeit in dem Behälter durch Zusatz von Wasser und/oder wässeriger alkalischer Lösung mit einer niedrigeren Temperatur als der der Löseflüssigkeit eingestellt wird, wobei diese wässerige alkalische Lösung vorzugsweise aus der Anlage zur Herstellung der Aufschlußflüssigkeit der Sulfatzellstoffindustrie zugeführt wird.

6. Verfahren nach einem oder mehreren der Ansprüche 1 bis 5, **dadurch gekennzeichnet**, daß die Temperatur der Löseflüssigkeit in dem Behälter durch Zirkulation der Löseflüssigkeit durch einen Kühler eingestellt wird.

7. Verfahren nach einem oder mehreren der Ansprüche 1 bis 6, **dadurch gekennzeichnet**, daß die Absorption von Kohlendioxid in der Löseflüssigkeit dadurch unterdrückt wird, daß das abwärts führende und das aufwärts führende Rohr so ausgelegt werden, daß die Gasströmungsgeschwindigkeit durch die Rohre 0,5 Meter pro Sekunde übersteigt.

8. Verfahren nach einem oder mehreren der Ansprüche 1 bis 7, **dadurch gekennzeichnet**, daß die Menge der durch das aufwärts führende Rohr gelangenden Löseflüssigkeit dadurch beschränkt wird, daß das abwärts führende und das aufwärts führende Rohr so ausgelegt werden, daß die Gasströmungsgeschwindigkeit in dem oberen Teil des aufwärts führenden Rohres weniger als 20 Meter pro Sekunde beträgt.

9. Verfahren nach einem oder mehreren der Ansprüche 1 bis 8, **dadurch gekennzeichnet**, daß das Gas 8 bis 40 Volumsprozent Kohlendioxid, berechnet auf trockenes Gas, enthält.

10. Verfahren nach einem oder mehreren der Ansprüche 1 bis 9, **dadurch gekennzeichnet**, daß die Löseflüssigkeit im oberen Teil des abwärts führenden Rohres durch einen Schlitz oder eine Anzahl von Öffnungen oder eine oder mehrere Düsen eingeführt wird und daß vorzugsweise die Gastemperatur im oberen Teil des aufwärts führenden Rohres auf eine Temperatur nahe der der Löseflüssigkeit abgesenkt worden ist.

11. Eine Vorrichtung zur Durchführung des Verfahrens zu Herstellung einer wässerigen Lösung von Natriumverbindungen, wobei diese Natriumverbindungen gemeinsam mit einem heißen, Kohlenmonoxid, Kohlendioxid und Wasserstoffgas enthaltenden Gas durch teilweise Verbrennung von Zellulose-Ablauge gebildet sind, nach einem oder mehreren der Ansprüche 1 bis 10, wobei die genannte Vorrichtung einen Behälter, der zur teilweisen Füllung mit einer Löseflüssigkeit bestimmt ist, einen Gasgenerator mit einer Reaktionszone (1) und ein vertikal angeordnetes, nach unten führendes Rohr (3) aufweist, das mit diesem Gasgenerator in Verbindung steht und eine Öffnung am unteren Teil desselben aufweist, **dadurch gekennzeichnet**, daß ein aufwärts führendes Rohr, das außerhalb des genannten abwärts führenden Rohres angeordnet ist und dieses abwärts führende Rohr ganz oder teilweise umgibt, vorgesehen und an beiden Enden offen ist und obere und untere Öffnungen aufweist, die so münden, daß ein Gas, das zuerst durch das abwärts führende Rohr gelangt, dann zwischen diesem abwärts führenden Rohr und dem genannten aufwärts führenden Rohr durch das genannte aufwärts führende Rohr nach oben strömt, und daß an dem oberen Teil des aufwärts führenden Rohres ein Schlitz, eine Anzahl von Öffnungen oder eine oder mehrere Düsen zur Zuführung von Löseflüssigkeit vorgesehen sind, sodaß die innere Oberfläche des abwärts führenden Rohres durch die Löseflüssigkeit vollständig geschützt wird, die als Kühlmittel wirkt und verhindert, daß die Verbindungen an der Innenseite des abwärts führenden Rohres (3) kleben bleiben.

## Revendications

1. Procédé de préparation d'une solution aqueuse de composés de sodium, lesdits composés du sodium étant formés conjointement avec un gaz chaud contenant du monoxyde de carbone, du dioxyde de carbone et de l'hydrogène gazeux par combustion partielle de liqueurs résiduaires de l'industrie de la cellulose, le gaz avec son contenu en composés du sodium étant mis en contact direct avec un liquide dissolvant dans un dispositif consistant en un récipient, partiellement rempli de liquide dissolvant, ledit gaz avec son contenu en composés du sodium étant amené à descendre à travers un tube descendant disposé verticalement (3), dont la partie supérieure est reliée à un générateur de gaz et la partie inférieure débouche en-dessous de la surface au repos du liquide dissolvant, caractérisé en ce que le gaz avec son contenu en composés du sodium est tout d'abord amené à descendre dans un récipient à travers ledit tube descendant (3) relié au générateur de gaz, tube dans lequel le liquide dissolvant est introduit dans sa partie supérieure, de façon à ce que la surface interne du tube descendant soit complètement protégée par le liquide dissolvant qui agit comme réfrigérant et empêche les composés de coller à l'intérieur dudit tube descendant (3), après quoi on fait passer vers le haut les contenus refroidis du gaz et ses composants gazeux entre ledit tube descendant et un tube ascendant (6), qui est ouvert à ses deux extrémités et qui est disposé de telle façon que la partie supérieure dudit tube ascendant s'ouvre au-dessus de la surface au repos du liquide dissolvant, et que sa partie inférieure débouche en-dessous de la surface au repos du liquide dissolvant, et qui entoure totalement ou partiellement le tube descendant, de façon à amener en contact intime le gaz, les composés du sodium et le liquide dissolvant, les composés du sodium étant séparés et dissous dans le liquide dissolvant, qui est récupéré pour la préparation d'un liquide, et le gaz désormais sensiblement exempt de composés du sodium étant évacué du récipient, et caractérisé en outre en ce que la solution de composés du sodium récupérée consiste essentiellement en une solution aqueuse de carbonate de sodium, de sulfhydrate de sodium (sulfure acide de sodium) et d'hydroxyde de sodium, à une concentration d'au moins 10 et d'au plus 200 g de composés du sodium (calculée en NaOH) par litre de solution et en ce que le liquide dissolvant dans le récipient est maintenu à une température d'au moins 40°C.

2. Procédé selon la revendication 1, caractérisé en ce que le liquide dissolvant dans le récipient est maintenu à une température inférieure d'au moins 5°C au point d'ébullition du liquide dissolvant à la pression de travail.

3. Procédé selon la revendication 1 ou 2, dans lequel la liqueur résiduaire de l'industrie de la cellulose est une liqueur usée obtenue lors de la production de pâte au sulfate, caractérisé en ce que le gaz introduit dans le tube descendant a une température comprise entre 700 et 1400°C, et en ce que les composés du sodium sont essentiellement du carbonate de sodium, du sulfure de sodium et de l'hydroxyde de sodium.

4. Procédé selon l'une ou plusieurs des revendications 1 à 3, caractérisé en ce que la pression est maintenue en-dessous de 3 bars.

5. Procédé selon l'une ou plusieurs des revendications 1 à 4, caractérisé en ce que la température du liquide dissolvant dans le récipient est ajustée en ajoutant de l'eau et/ou une solution aqueuse alcaline ayant une température inférieure à celle du liquide dissolvant, la solution aqueuse alcaline étant de préférence fournie par le système de préparation de la liqueur digestive de l'industrie de la pâte au sulfate.

6. Procédé selon l'une ou plusieurs des revendications 1 à 5, caractérisé en ce que la température du liquide dissolvant dans le récipient est ajustée en faisant circuler le liquide dissolvant à travers un réfrigérant.

7. Procédé selon l'une ou plusieurs des revendications 1 à 6, caractérisé en ce que l'absorption du dioxyde de carbone dans le liquide dissolvant est supprimée en concevant les tubes descendant et ascendant de telle façon que la vitesse d'écoulement du gaz à travers les tubes excède 0,5 m/s.

8. Procédé selon l'une ou plusieurs des revendications 1 à 7, caractérisé en ce que la quantité de liquide dissolvant entraîné à travers le tube ascendant est limitée en concevant les tubes ascendant et descendant de telle façon que la vitesse d'écoulement du gaz dans la partie supérieure du tube ascendant soit inférieure à 20 m/s.

9. Procédé selon l'une ou plusieurs des revendications 1 à 8, caractérisé en ce que le gaz contient 8 à 40% en volume de dioxyde de carbone calculé sur la base de gaz sec.

10. Procédé selon l'une ou plusieurs des revendications 1 à 9, caractérisé en ce que le liquide dissolvant est introduit dans la partie supérieure du tube descendant à travers une fente ou un certain nombre d'orifices ou une ou plusieurs buses, et de préférence en ce que la température du gaz dans la partie supérieure du tube ascendant a été abaissée jusqu'à une température proche de celle du liquide dissolvant.

11. Dispositif pour la mise en oeuvre d'un procédé de préparation d'une solution aqueuse de composés du sodium, lesdits composés du sodium étant formés conjointement avec un gaz chaud contenant du monoxyde de carbone, du dioxyde de carbone et de l'hydrogène gazeux par combustion partielle de liqueurs résiduaires de l'industrie de la cellulose, selon l'une ou plusieurs des revendications 1 à 10, ledit dispositif comprenant un récipient destiné à être rempli partiellement avec un liquide dissolvant, un générateur de gaz avec une zone de réaction (1) et un tube ascendant disposé verticalement (3) relié audit générateur de gaz et ayant une ouverture à sa partie inférieure, caractérisé en ce qu'il est muni d'un tube ascendant qui est disposé à l'extérieur dudit tube descendant et qui entoure totalement ou partiellement ledit tube descendant et qui est ouvert à ses deux extrémités et présente des ouvertures supérieure et inférieure débouchant de telle façon que le gaz qui passe en premier lieu dans le tube descendant est ensuite amené à passer entre ledit tube descendant et ledit tube ascendant et vers le haut dans ledit tube ascendant, et en ce que la partie supérieure dudit tube descendant est munie d'une fente, d'un certain nombre d'orifices ou d'une ou plusieurs buses pour l'introduction de liquide dissolvant, de telle façon que la surface interne du tube descendant soit complètement protégée par le liquide dissolvant qui agit en tant que réfrigérant, et empêche les composés de coller à l'intérieur dudit tube descendant (3).
